# FASCICULE DE BREVET EUROPEEN

(11) **EP 2 132 068 B1**
(45) Date de publication et mention de la délivrance du brevet: **22.10.2014**
(21) Numéro de dépôt: 08799899.3
(22) Date de dépôt: 26.03.2008
(51) Int. Cl.: B60T 7/20, B60T 13/08, B60T 11/10

(54) **Dispositif de freinage pour remorque**
Bremssystem für Anhänger
Braking device for trailer

(30) Priorité: 28.03.2007 FR 0754074
(43) Date de publication de la demande: 16.12.2009
(73) Titulaire: Gaussin, Christophe, 1093 La Conversion (CH)
(72) Inventeur: CRAMATTE, Olivier, F-90140 Bourogne (FR)
(74) Mandataire: Rhein, Alain
(86) Numéro de dépôt international: PCT/FR2008/050522
(87) Numéro de publication internationale: WO 2008/129219

(56) Documents cités:
- DE-A1- 1 580 491
- DE-A1- 1 929 216
- DE-A1- 3 221 320
- DE-C- 679 103
- US-A- 3 647 032

## Description

La présente invention concerne un dispositif de freinage pour remorque.

L'invention concerne encore une remorque pourvue d'un tel dispositif de freinage et un dispositif d'actionnement pour timon pour un tel dispositif de freinage pour remorque.

La présente invention entre dans le domaine des véhicules à déplacement terrestre, en particulier les remorques et convois de remorques.

Il est déjà connu des systèmes de blocage des roues de remorques efficaces, mais nécessitant une intervention manuelle d'un opérateur, qui est souvent le conducteur de l'engin tracteur, par exemple via une manivelle, pour les armer. Ce type de frein parking impose au conducteur de l'engin tracteur de descendre de l'engin tractant la ou les remorques, et de plus ne constitue pas une solution de freinage en cours de trajet.

Le document DE 679103C est considéré comme l'état plus proche de la technique et décrit les caractéristiques du préambule de la revendication 1.

Un des objets de l'invention est d'aboutir à un système de freinage ne nécessitant aucune intervention manuelle pour son enclenchement.

En ce qui concerne le freinage des remorques en déplacement, il est également connu l'emploi de dispositifs de freinage pour remorque comportant au moins un actionneur conçu apte à être disposé au niveau du timon de la remorque, commandant les freins de la remorque via des moyens reliant l'actionneur de timon aux freins. La commande des freins par l'actionneur de timon peut éventuellement se faire au travers d'actionneurs supplémentaires dits actionneurs de freins pour les distinguer de l'actionneur dé timon, disposés au niveau des essieux de la remorque, près des freins.

Usuellement les actionneurs évoqués sont constitués par des vérins hydrauliques et les moyens les reliant entre eux et aux freins sont constitués par un circuit hydraulique fermé.

La tige du piston du vérin de timon servant d'attache-remorque, le mouvement du piston du vérin de timon est directement commandé par une traction exercée sur la tige.

On connaît ainsi, par le document DE 679 103 C, un dispositif de freinage pour remorque, comportant un actionneur de timon, mais qui nécessite d'être actionné par une commande séparée en cas de rupture d'attelage.

Le document DE 32 21 320 décrit une remorque avec frein à disque actionné par un système hydraulique et des moyens de déclenchement du freinage en cas de recul inopiné. Toutefois ce dispositif n'est pas autonome.

Ainsi si une traction, consécutive par exemple au déplacement de l'engin tracteur attaché à la remorque, est exercée au niveau du vérin de timon, l'équilibre hydraulique du système fermé est déplacé de manière à commander la libération des freins, la remorque n'opposant plus aucune résistance à son déplacement initié par l'engin tracteur.

Au contraire, la tige du vérin de timon venant à se rétracter dans le vérin de timon, suite au ralentissement ou l'arrêt de l'engin tracteur, ou encore une avancée trop brusque de la remorque suite à un carambolage, génère une situation de freinage.

Le freinage via les vérins hydrauliques existants n'est cependant pas satisfaisant en cas de rupture d'attelage, de rupture de pente ou de heurt de la remorque par l'arrière avec rupture d'attelage. Rien n'empêche, en cas de rupture d'attelage, que la remorque poursuive sur sa lancée, et rien n'empêche, en cas de rupture de pente ou de heurt par l'arrière avec rupture d'attelage, que la remorque ne vienne heurter l'engin tracteur, endommageant, au mieux, le chargement.

Il est donc un autre objet de l'invention que d'aboutir à un système de freinage insensible aux phénomènes de rupture d'attelage, de rupture de pente ou de heurt par l'arrière avec rupture d'attelage, heurt pouvant conduire à un carambolage massif dans le cadre d'un convoi.

L'état de la technique ne comporte que des dispositifs où la fonction de rupture d'attelage est mise en oeuvre par des moyens différents de ceux pilotant la fonction de freinage.

En effet le freinage via les vérins hydrauliques existants est encore moins satisfaisant dans le cadre de convois de remorques.

Dans ce contexte, le freinage de l'ensemble du convoi sans heurts est un problème majeur. La masse cumulée du convoi et de son chargement peut être importante, nécessitant un système de freinage efficace et sécuritaire.

Dans le cadre de convois, il est connu la nécessité de freiner davantage le dernier élément dudit convoi afin de limiter la répercussion, de proche en proche, de l'énergie cinétique du dernier élément du convoi jusqu'au premier élément du convoi.

Ainsi, l'ordre des remorques constituant le convoi doit être immuable, la pression de freinage étant calibrée par rapport à la position de la remorque dans la chaîne.

Ceci constitue évidemment un autre inconvénient majeur, puisqu'il serait avantageux de pouvoir librement interchanger les remorques les unes avec les autres, cette liberté d'agencement permettant une souplesse logistique évidente.

Il est encore un autre objet de l'invention que d'aboutir à un système de freinage permettant le libre positionnement d'une remorque dans un convoi de remorques.

L'invention se propose de pallier les inconvénients de l'état de la technique en proposant un dispositif de freinage autonome, ne nécessitant pas d'apport d'énergie extérieure, et ne nécessitant aucune intervention manuelle pour son enclenchement.

A cet effet l'invention concerne un dispositif de freinage pour remorque, comportant au moins un actionneur de timon conçu apte à être disposé au niveau du timon de la remorque et des moyens reliant ledit actionneur de timon avec un ou des systèmes de freins de la remorque, et comportant en plus des moyens de rappel automatique de l'actionneur de timon en situation de freinage, caractérisé en ce qu'il comporte en plus au moins un actionneur de freins conçu apte à commander un ou plusieurs systèmes de freins au niveau d'une ou de plusieurs roues de la remorque, ledit actionneur de freins étant également relié aux moyens reliant l'actionneur de timon avec le ou les systèmes de freins de la remorque et s'intercalant entre l'actionneur de timon et le ou les systèmes de freins de la remorque, de manière à ce que, lorsque l'actionneur de timon est soumis à un effort nul, notamment en cas de rupture d'attelage de la remorque, la remorque est immédiatement placée en situation de freinage.

Selon une autre caractéristique de l'invention les actionneurs de timons et/ou de freins se composent de vérins hydrauliques et/ou pneumatiques et les moyens reliant au moins le ou les actionneurs de timon avec le ou les actionneurs de freins sont constitués par un circuit hydraulique et/ou pneumatique.

De manière avantageuse, les moyens de rappel automatiques sont constitués par des moyens de rappel élastique, tels un ressort.

Le dispositif de freinage selon l'invention peut en outre comprendre un moyen de régulation de l'intensité de freinage au niveau du ou des freins de la remorque.

Outre l'avantage procuré par son autonomie à l'égard de sources d'énergie extérieures, le dispositif de freinage selon l'invention comporte un point de pilotage unique pour les fonctions de freinage et de rupture d'attelage.

L'invention concerne également une remorque équipée d'un dispositif de freinage pour remorque tel qu'évoqué et un dispositif d'actionnement au timon pour remorque pour un tel dispositif de freinage, comportant au moins un actionneur de timon et des moyens de rappel automatique de l'actionneur de timon en situation de freinage.

D'autres caractéristiques et avantages de l'invention ressortiront de la description détaillée qui va suivre, se rapportant à un exemple de réalisation donné à titre indicatif et non limitatif.

La compréhension de cette description sera facilitée en se référant aux dessins joints dans lesquels :
- la figure 1 représente de manière schématique l'état d'un dispositif de freinage pour remorque selon l'invention en position de service correspondant à une situation de freinage de la remorque.
- la figure 2 représente de manière schématique l'état d'un dispositif de freinage selon l'invention pour une remorque en cours de traction, en marche libre.

Tel que visible dans les figures des dessins joints, la présente invention concerne le domaine des véhicules à déplacement terrestre et en particulier les remorques, et a trait à un dispositif de freinage pour remorque.

Le dispositif de freinage est conçu pour être intégré dans sa totalité à une remorque destinée à être tractée par un engin par l'intermédiaire d'un système d'accrochage au niveau de son timon.

Ce dispositif de freinage se compose d'un actionneur 1 de timon, disposé au niveau du timon de la remorque, un actionneur 2 de freins, conçu apte à commander un ou plusieurs systèmes de freins 3 au niveau d'une ou de plusieurs roues de la remorque et des moyens 4 reliant l'actionneur 1 de timon, l'actionneur 2 de freins et les freins 3.

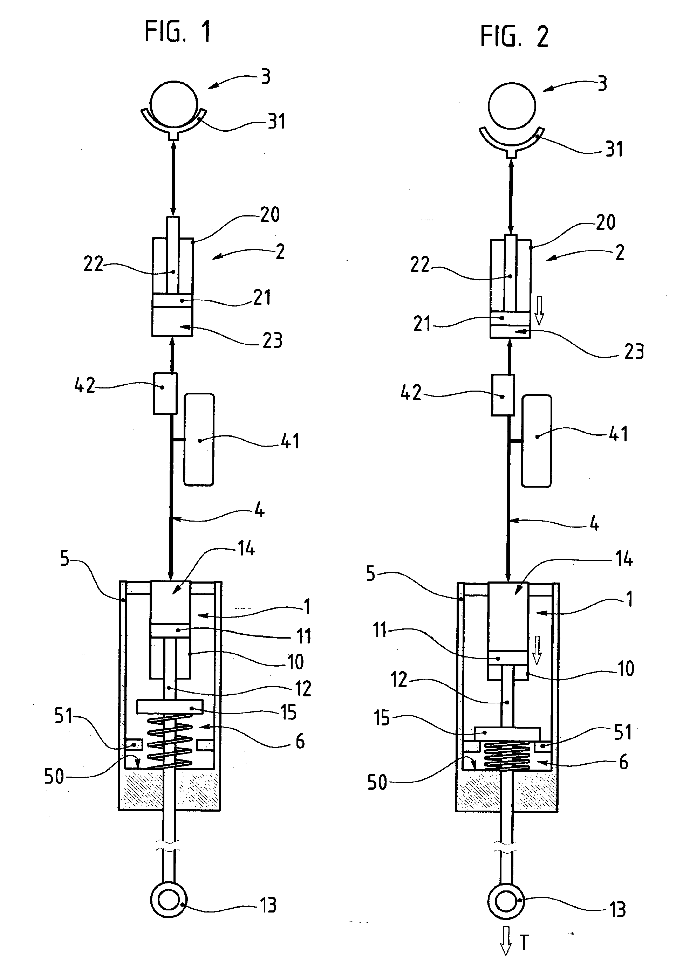

Les figures 1 et 2 se rapportent à un exemple schématique de réalisation d'un tel dispositif de freinage pour remorque, dans le mode particulier de réalisation avec des actionneurs hydrauliques.

L'actionneur 1 de timon se présente sous la forme d'un vérin hydraulique comportant un cylindre 10, un piston 11 et une tige 12. La tige 12 comporte en outre un anneau d'attelage 13 permettant l'accrochage de l'engin tracteur à la remorque.

L'actionneur 2 de freins se présente également sous la forme d'un vérin hydraulique comportant un cylindre 20, un piston 21 et une tige 22.

Le système de freinage 3, disposés au niveau des roues de la remorque, consiste en des freins 3 à tambour, comportant des mâchoires 31. Il va de soi que le système de freinage 3 pourra être différent de freins à tambours.

L'actionneur 1 de timon, l'actionneur 2 de freins et les freins 3 sont reliés par un circuit hydraulique 4. Ce circuit étant 4 fermé, l'équilibrage des pressions et volumes est constant et sans pertes.

Les cylindres 10 et 20 des actionneurs 1 et 2 définissent respectivement des chambres 14 et 23 accueillant le fluide du circuit hydraulique 4.

Afin de protéger l'actionneur 1 de timon, celui-ci se trouve avantageusement disposé dans un châssis 5, venant à la fois empêcher l'infiltration de saletés dans l'actionneur et le maintenir solidaire de la remorque au niveau de son timon.

La tige 12 traverse le fond 50 du châssis 5 pour que son anneau 13 puisse être accessible sans ouverture du châssis 5.

Selon l'invention, le dispositif de freinage présente des moyens de rappel automatique 6 de la tige 12, sous forme de moyens de rappel élastique, en l'occurrence un ressort 6 à spires non jointives.

Ce ressort 6 est disposé entre un épaulement le long de la tige 12 et le fond 50 qui constitue une butée solidaire de la remorque.

Le ressort 6 vient donc prendre appui sur le fond 50, fixe par rapport à l'actionneur 1 de timon, du châssis 5, et s'étend entre ce fond 50 et un épaulement le long de la tige 12, cette dernière étant mobile dans l'actionneur 1 de timon.

L'épaulement le long de la tige 12 est avantageusement constitué par un flasque additionnel 15 le long de la tige 12.

Le châssis 5 comporte de plus des butées 51 d'appui internes au châssis 5, disposées entre le fond 50 du châssis 5 et l'épaulement 15 le long de la tige 12, et destinées à réduire les risques d'usure du ressort 6 par déformation excessive lors de sa compression, l'épaulement 15 venant alors en butée contre les butées 51 d'appui internes au châssis 5.

La figure 1 présente l'état du dispositif de freinage selon l'invention dans sa position de service, correspondant à une situation de freinage de la remorque.

Le fonctionnement du système de freinage selon l'invention permet d'atteindre le freinage de la remorque en l'absence d'effort de traction exercé sur la tige 12. En effet, en l'absence d'effort de traction T sur l'anneau 13, le ressort 6 exerce automatiquement une poussée sur l'épaulement 15, amenant de ce fait le piston 11 dans une position telle que le volume de fluide contenu dans la chambre du cylindre 10 soit minimal pour un ressort 6 de longueur donnée.

La conservation des volumes étant acquise dans le circuit hydraulique 4, le volume de fluide contenu dans la chambre du cylindre 20 devient de ce fait maximal.

Le piston 21 est donc repoussé par la pression du volume de fluide contenu dans la chambre du cylindre 20, faisant ressortir à l'extérieur de l'actionneur 2 la tige 22. Cette position de la tige 22 commande le système de freins 3 de manière à induire un déplacement des mâchoires 31 de frein venant bloquer les roues de la remorque.

On voit ainsi que le dispositif de freinage selon l'invention constitue un frein de parking automatique, pour une remorque non attelée.

La figure 2 illustre par un schéma de principe ce qui se passe lorsque l'anneau 13, et donc la tige 12, sont soumis à une force de traction T de la part d'un engin tracteur, ou par l'action manuelle d'un opérateur lorsque la remorque est à vide.

Une traction T de force suffisante exercée sur la tige 12, mobile par rapport à l'actionneur de timon 1, la fait ressortir partiellement dudit actionneur de timon 1. Le déplacement imposé à la tige 12 l'est également à l'épaulement 15, qui vient de ce fait comprimer le ressort 6.

Suite au déplacement de la tige 12, le mouvement du piston 11 qui lui est solidaire conduit à une augmentation de volume de la chambre du cylindre 10. L'appel de fluide dans cette chambre déplace l'équilibre des fluides dans le circuit hydraulique 4 de manière à créer une dépression au niveau de la chambre du cylindre 20.

Le piston 21 se déplace donc dans la chambre du cylindre 20 dans le sens d'une réduction du volume de cette dernière, amenant une rétractation de la tige 22 à l'intérieur du cylindre 20 de l'actionneur 2.

Cette position de la tige 22 commande le système de freins 3 de manière à induire un écartement des mâchoires 31 de frein des roues de la remorque, assurant le déblocage de ces dernières. Il en découle une marche libre de la remorque, sans freinage.

Les figures 1 et 2 présentent encore un circuit hydraulique 4 complété par un moyen de sécurisation 41 du circuit hydraulique 4, sous forme d'accumulateur hydraulique 41 monté en dérivation sur le circuit hydraulique 4 entre l'actionneur de timon 1 et l'actionneur de freins 2.

Cet accumulateur hydraulique 41 permet également l'obtention d'un effet tampon dans le circuit hydraulique 4, le rendant moins sensible à des perturbations de pressions pouvant être liées à des chocs divers. L'accumulateur 41 peut prendre la forme d'une chambre air-fluide hydraulique, gonflé à la pression du pic de freinage de la remorque.

Le circuit hydraulique 4 étant généralement réalisé grâce à des tuyaux flexibles, l'accumulateur hydraulique 41 constitue surtout une sécurité en cas de rupture du circuit hydraulique 4. Il demeure facultatif pour de petites charges.

Dans le cas d'une rupture du circuit hydraulique 4, on souhaitera par défaut que l'accumulateur hydraulique 41 alimente le circuit hydraulique 4 en direction des freins 3. Pour ce faire, il apparaîtra utile à l'homme du métier de disposer l'accumulateur hydraulique 41 à proximité des freins, avec des moyens, non représentés sur les figures, tels qu'un clapet anti-retour sur la partie du circuit dirigée vers l'actionneur de timon 1.

Le circuit hydraulique 4 est également complété par un moyen de régulation de l'intensité de freinage 42, sous forme d'un gicleur 42. La présence du gicleur 42 améliore significativement le fonctionnement du dispositif de freinage. Il peut prendre la forme d'un étranglement, avantageusement disposé entre l'accumulateur hydraulique 41 et les actionneurs de freins 2. Sa principale fonction est d'éviter un freinage brutal, dû à un brusque afflux de fluide du circuit hydraulique au niveau de l'actionneur de freins 2.

Il permet en outre également d'absorber, en synergie avec l'accumulateur 41, les pics de pression ponctuels dus par exemple à des secousses.

Selon une variante non représentée du dispositif de freinage pour remorque, on pourra ajouter des ressorts de rappel au niveau des actionneurs de freins 2, dans l'objectif d'amorcer plus facilement la mise en situation de marche libre de la remorque, dans le cas où le déplacement des fluides dans le circuit hydraulique 4 ne soit pas assez puissant pour induire immédiatement le déplacement du piston 21 et l'écartement des mâchoires 31 de freins qui lui succède.

Il résulte du dispositif de freinage selon l'invention que, dès que l'effort de traction T au niveau de la tige 12 devient nul, la remorque est automatiquement freinée.

On rappellera que dans l'état de la technique, où un tel dispositif est exempt de moyens de rappels automatiques 6, freinage et déblocage sont conditionnés par le déplacement effectif de la tige 12.

On voit ainsi l'apport avantageux de l'invention en cas de rupture d'attelage, rupture de pente ou heurt par l'arrière avec rupture d'attelage entre un engin tracteur et une remorque. En effet, le freinage automatique en l'absence d'effort de traction permet à la remorque de s'arrêter plutôt que de poursuivre sur sa lancée, ce qui se passe pour une remorque non pourvue du dispositif selon l'invention.

Selon l'invention, lorsque l'actionneur de timon est soumis à un effort nul, notamment en cas de rupture d'attelage de la remorque, la remorque est immédiatement placée en situation de freinage. Le dispositif selon l'invention permet d'intégrer une fonction automatique et instantanée de freinage d'urgence ou de secours à une remorque équipée dudit dispositif.

En ce qui concerne le défreinage des roues, la répercussion de l'effort de traction appliqué au niveau de l'anneau 13 est maximale au niveau des freins 3 dès que le ressort 6 est entièrement comprimé. On peut ainsi parler d'un défreinage immédiat dès entière compression du ressort 6.

En revanche, si un effort moindre, le ressort n'étant dans ce cas que partiellement comprimé, peut suffire à débloquer légèrement les freins 3, le défreinage des roues pourra être progressif, graduel en fonction de la course du ressort 6 et celle des pistons 11 et 21. De manière inverse le freinage sera également progressif.

Dans tous les cas, dès que l'effort de traction devient nul, la remorque, sous l'effet du ressort 6, freine. Dans un convoi de remorques où chaque remorque est équipée d'un tel dispositif de freinage, les remorques freinent individuellement et indépendamment des autres. A ce propos il est en effet un autre avantage du dispositif de freinage selon l'invention qu'aucune énergie n'est à ponctionner sur l'engin tracteur.

Ainsi, d'une part aucun couplage entre les dispositifs de freinage des remorques, et donc les remorques, n'est nécessaire et d'autre part les remorques, n'ayant pas d'efforts de freinage distincts car calibrés en fonction en fonction de leur position dans le convoi, deviennent interchangeables, ce qui constitue un avantage logistique substantiel.

On trouvera ci-après un exemple chiffré de réalisation, dans le cas d'un dispositif de freinage entièrement hydraulique selon l'invention. Le diamètre du piston 21 est choisi égal à 50 mm avec une course de 25 mm. Le diamètre du piston 11 est choisi égal à 25 mm avec une course de 100 mm, course correspondante à celle du ressort 6. La raideur du ressort 6 est ajustée pour que l'effort nécessaire pour le comprimer soit de 250 N.

En effet, cette valeur de 250 N est suffisante pour assurer une résistance au fluide du circuit hydraulique 4 lors du rappel automatique, généré par le ressort 6, des pistons (11, 21) en situation de freinage.

Pour autant, cette valeur de 250 newtons reste suffisamment faible pour permettre une traction manuelle à vide de la remorque si l'on souhaite la déplacer.

Le dispositif de freinage a été présenté selon un mode préférentiel entièrement hydraulique, qui présente l'avantage de nécessiter une maintenance minimale. Il va cependant de soi que l'homme du métier pourra aisément le concevoir en tout ou partie avec des éléments pneumatiques ou mécaniques, voire grâce à des équivalents électriques ou à commande électronique.

En outre, si l'emploi d'un seul actionneur de freins 2 par essieu de remorque peut s'avérer suffisant, l'homme du métier pourra choisir de disposer plusieurs actionneurs de freins 2 sur chaque essieu, par exemple deux actionneurs de freins 2 par essieu.

L'invention concerne également une remorque équipée du dispositif de freinage pour remorque tel que décrit plus haut.

Il est également possible de transformer une remorque de l'état de la technique en remorque équipée du dispositif de freinage selon l'invention. Des kits de transformation et de rechange pourront ainsi être prévus.

Pour une remorque pré-équipée d'un actionneur 1 de timon, de freins 3 et de moyens 4 les reliant, l'adjonction d'un moyen de rappel automatique 6, par exemple un ressort 6, pour commander le rappel automatique de l'actionneur 1 de timon en situation de freinage peut suffire.

Ainsi, l'invention concerne encore un dispositif d'actionnement pour timon d'une remorque pour dispositif de freinage, comportant au moins un actionneur de timon et des moyens de rappel automatique de l'actionneur de timon en situation de freinage.

## Revendications

1. Dispositif de freinage pour remorque, comportant au moins un actionneur (1) de timon conçu apte à être disposé au niveau du timon de la remorque et des moyens (4) reliant ledit actionneur (1) de timon avec un ou des systèmes de freins (3) de la remorque, et comportant en plus des moyens de rappel automatique (6) de l'actionneur de timon (1) en situation de freinage, **caractérisé en ce qu'**il comporte en plus au moins un actionneur (2) de freins conçu apte à commander un ou plusieurs systèmes de freins (3) au niveau d'une ou de plusieurs roues de la remorque, ledit actionneur (2) de freins étant également relié aux moyens (4) reliant l'actionneur (1) de timon avec le ou les systèmes de freins (3) de la remorque et s'intercalant entre l'actionneur (1) de timon et le ou les systèmes de freins (3) de la remorque, de manière à ce que, lorsque l'actionneur (1) de timon est soumis à un effort nul, notamment en cas de rupture d'attelage de la remorque, la remorque est immédiatement placée en situation de freinage.

2. Dispositif de freinage pour remorque selon la revendication 1, caractérisé en ce les actionneurs (1,2) de timon et/ou de freins se composent de vérins hydrauliques et/ou pneumatiques et les moyens (4) reliant au moins le ou les actionneurs (1) de timon et le ou les actionneurs (2) de freins sont constitués par un circuit hydraulique et/ou pneumatique.

3. Dispositif de freinage selon l'une des revendications 1 à 2, **caractérisé en ce qu'**il comprend en plus un moyen (42) de régulation de l'intensité de freinage au niveau du ou des systèmes de freins (3) de la remorque, tel un gicleur (42).

4. Dispositif de freinage pour remorque selon l'une des revendications précédentes, **caractérisé en ce que** les moyens de rappel automatiques (6) sont constitués par des moyens de rappel élastique (6), tels un ressort (6).

5. Dispositif de freinage selon l'une des revendications 2 à 4, **caractérisé en ce qu'**il comprend en plus un moyen de sécurisation (41) du circuit (4) hydraulique et/ou pneumatique et/ou hydropneumatique, tel un accumulateur hydraulique (41) et/ou pneumatique.

6. Remorque **caractérisée en ce qu'**elle est équipée d'un dispositif de freinage pour remorque selon l'une des revendications 1 à 5.

7. Dispositif de freinage selon l'une des revendications 1 à 5, **caractérisé en ce qu'**il comporte une dispositif d'actionnement pour timon d'une remorque pour le dispositif de freinage qui comporte au moins un actionneur (1) de timon et des moyens de rappel automatique (6) de l'actionneur (1) de timon en situation de freinage.

## Patentansprüche

1. Bremsvorrichtung für einen Anhänger, umfassend wenigstens einen Deichselaktuator (1), der geeignet vorgesehen ist, um im Bereich der Deichsel des Anhängers angeordnet zu werden, und Mittel (4), die den besagten Deichselaktuator (1) mit einem oder mehreren Bremssystemen (3) des Anhängers verbinden, und umfassend außerdem Mittel zur automatischen Rückstellung (6) des Deichselaktuators (1) in eine Bremslage, **dadurch gekennzeichnet, dass** sie außerdem mindestens einen Bremsenaktuator (2) umfasst, der geeignet vorgesehen ist, um ein oder mehrere Bremssysteme (3) im Bereich von einem oder mehreren Rädern des Anhängers zu steuern, wobei der besagte Bremsenaktuator (2) auch mit den Mitteln (4), die den Deichselaktuator (1) mit dem oder den Bremssystemen (3) des Anhängers verbinden, verbunden ist, und zwischen dem Deichselaktuator (1) und dem oder den Bremssystemen (3) des Anhängers zwischengefügt ist, so dass, wenn der Deichselaktuator (1) einer Nullkraft ausgesetzt ist, nämlich bei Unterbrechung der Anhängerkupplung, der Anhänger sofort in Bremslage gebracht wird.

2. Bremsvorrichtung für einen Anhänger nach Anspruch 1, **dadurch gekennzeichnet, dass** die Deichsel- und/oder Bremsaktuatoren (1,2) aus Hydraulik- und/oder Pneumatikzylindern bestehen und die Mittel (4), die zumindest den bzw. die Deichselaktuatoren (1) und den bzw. die Bremsaktuatoren (2) verbinden, aus einem Hydraulik- und/oder Pneumatikkreislauf bestehen.

3. Bremsvorrichtung nach einem der Ansprüche 1 bis 2, **dadurch gekennzeichnet, dass** sie außerdem ein Mittel (42) zum Regulieren der Bremsintensität im Bereich des oder der Bremssysteme (3) des Anhängers, wie eine Düse (42), umfasst.

4. Bremsvorrichtung für einen Anhänger nach einem der vorhergehenden Ansprüche, **dadurch gekennzeichnet, dass** die automatische Rückstellmittel (6) aus elastischen Rückstellmitteln (6), wie einer Feder (6), bestehen.

5. Bremsvorrichtung nach einem der Ansprüche 2 bis 4, **dadurch gekennzeichnet, dass** sie außerdem ein Mittel zur Sicherung (41) des Hydraulik- und/oder Pneumatik- und/oder Hydropneumatikkreislaufs (4), wie einen Hydro- und/oder pneumatischen Speicher (41), umfaßt.

6. Anhänger, **dadurch gekennzeichnet, dass** er mit einer Bremsvorrichtung für einen Anhänger nach einem der Ansprüche 1 bis 5 ausgestattet ist.

7. Bremsvorrichtung nach einem der Ansprüche 1 bis 5, **dadurch gekennzeichnet, dass** sie eine Betätigungsvorrichtung für eine Anhängerdeichsel für die Bremsvorrichtung umfasst, die mindestens einen Deichselaktuator (1) und Mittel zur automatischen Rückstellung (6) des Deichselaktuators (1) in die Bremslage umfasst.

## Claims

1. Braking device for a trailer, including at least one drawbar actuator (1) designed capable of being arranged at the level of the drawbar of the trailer and means (4) connecting said drawbar actuator (1) to one or several brake systems (3) of the trailer, and including in addition means for automatically restoring (6) the drawbar actuator (1) into a braking situation, wherein it includes in addition at least one brake actuator (2) designed capable of controlling one or several brake systems (3) at the level of one or several wheels of the trailer, said brake actuator (2) being also connected to the means (4) connecting the drawbar actuator (1) to the brake system or systems (3) of the trailer and being interposed between the drawbar actuator (1) and the brake system or systems (3) of the trailer, so that, when the drawbar actuator (1) is subjected to a zero effort, namely in the case of breakage of the coupling of the trailer, the trailer is immediately placed into braking situation.

2. Braking device for a trailer according to claim 1, wherein the drawbar actuators and/or brake actuators (1, 2) consist of hydraulic and/or pneumatic cylinders and the means (4) connecting at least the drawbar actuator or actuators (1) and the brake actuator or actuators (2) are formed by a hydraulic and/or pneumatic circuit.

3. Braking device according to one of claims 1 to 2, wherein it comprises in addition means (42) for regulating the braking strength at the level of the brake system or systems (3) of the trailer, such a nozzle (42).

4. Braking device for a trailer according to one of the preceding claims, wherein the automatic restoring means (6) are formed by elastic restoring means (6), such as a spring (6).

5. Braking device according to one of claims 2 to 4, wherein it comprises in addition means for securing (41) the hydraulic and/or pneumatic and/or hydro-pneumatic circuit (4), such as a hydraulic (41) and/or pneumatic accumulator.

6. Trailer, wherein it is equipped with a braking device for a trailer according to one of claims 1 to 5.

7. Braking device according to one of claims 1 to 5, wherein it includes an actuating device for the trailer drawbar for the braking device, which includes at least one drawbar actuator (1) and means for automatically restoring (6) the drawbar actuator (1) into a braking situation.
